# EUROPEAN PATENT SPECIFICATION

(11) **EP 1 857 374 B1**
(45) Date of publication and mention of the grant of the patent: **22.09.2010**
(21) Application number: 06725776.6
(22) Date of filing: 22.02.2006
(51) Int. Cl.: B65D 55/02, B65D 41/34, G06K 19/07, B65D 41/62

(54) **BOTTLE CAP AND BOTTLE**
FLASCHENVERSCHLUSS UND FLASCHE
CAPSULE POUR BOUTEILLES ET BOUTEILLE

(30) Priority: 24.02.2005 ES 200500417
(43) Date of publication of application: 21.11.2007
(73) Proprietor: Ramondin Capsulas, SA, 01300 Laguardia (Alava) (ES)
(72) Inventor: BREYSSE, Marc, E-08005 Barcelona (ES); GONZALEZ ELORRIAGA, Felix, E-26006 Logroño (La Rioja) (ES)
(74) Representative: Carpintero Lopez, Francisco
(86) International application number: PCT/ES2006/000078
(87) International publication number: WO 2006/089988

(56) References cited:
- EP-A- 0 619 243
- EP-A2- 0 065 285
- JP-A- 2004 018 003
- US-A1- 2003 061 705
- US-A1- 2003 061 706
- US-B1- 6 226 619
- SHIRATO A: "Bottle equipped with integrated circuit tag e.g. liquor containers, has antenna at cap detecting opening of bottle by disconnecting lead wire connected between integrated circuit chip at skirt and cap, during rotation of cap" DATABASE WPI,, 1 January 1900 (1900-01-01), XP003014333

## Description

### Field of the Art

The present invention generally relates to a capsule for bottles, incorporating a device with identifying data, which can be detected and read in a wireless manner for the purpose of preventing the theft, fraudulent manipulation and/or the counterfeiting of the bottles incorporating such a type of capsule, and more particularly to a capsule for bottles with an RFID or radiofrequency identification tag.

A bottle is also proposed which can be applied to contain alcoholic beverages or liquors, comprising a capsule like the one proposed.

### Prior State of the Art

One of the most important challenges faced by the sector of wine, liquors and other beverages is the effective protection of its products against counterfeiters.

The brand counterfeiting market has increased dramatically in all the economy sectors (150% between 1990 and 1995), applied to several types of products.

A really worrying aspect is that 60% of counterfeit products are sold in the official channel, the beverage sector being one of the most affected.

Counterfeiting consists of imitating or copying the bottles of the most known and renowned brands, or filling empty bottles with any low-quality beverage. The process starts with the collection of empty containers by weiters or the staff of some bars and restaurants, who sell an attractive collection of bottles for a small amount of money, or by means of a coordinated action with some waste collectors. It is quite easy for these mafias to fill and re-encapsulate the bottles, if it is considered that the means necessary for counterfeiting them do not involve an important investment. These counterfeiting networks devote themselves to filling authentic bottles of known brands with low-quality beverages, selling said counterfeit bottles at below their usual price, many times also in the official channel, with the subsequent damage for the brands. It is only the capsule, which usually does not have any type of identification, which in some cases could distinguish them just by looking at them though not always, because the content cannot be seen.

It is seriously damaging for the consumer, who is deceived but it is especially damaging for the industry, the products of which lose prestige, some brands being able to lose up to 20% to 30% of their turnover due to these fraudulent practices.

Apart from the economic damage for the manufacturers, and especially the loss of reputation for the brands, it may be a health risk for the consumers because there is no control or hygiene in the counterfeiting business These bottles are original ones and the conditions in which they are packaged and the types of product with which they are filled are not known, and this aspect may represent a serious hazard for public health.

Most brands attempt to protect themselves against this important fraud and some of them even invest 3 to 5% of their turnover both in anti-counterfeiting systems and components and in undertaking legal actions.

Some security elements are the tags and seals surrounding both the bottle and the bottle neck. They can incorporate different security elements: security bottoms, encoded printing, iridescent printing, rosettes, anti-scanner and anti-photocopy colors, neutral response to ultraviolet light, luminescent fibers and ink that is only visible by means of its exposure to ultraviolet light, latent image, microtext, phosphorescent inks ... or DNA print (This DNA coding allows certifying the authenticity of high price products).

One of the drawbacks of security tags is that they do not easily prevent the products from being counterfeited because they can be reproduced quite faithfully, without the consumer being able to detect the fraud or due to the fact that the original tags can be easily removed although special glues are used to stick them.

In the wine sector, the producers attempt to introduce new security elements, corks with special seals, laser etching in the glass of the bottles.

But in spite of the different existing anti-counterfeiting alternatives, none of them allows the final user to recognize the quality and originality of the product easily, reliably, safely and without depending on third parties. For example, the use of an advanced hand scanner is necessary in the case of DNA prints.

The aforementioned systems also do not allow identifying if an authentic bottle has been stolen or deviated from the market to which it was directed, or recognizing if a false bottle is being distributed through the official channel.

It is therefore necessary to have a really effective system that can assure that each bottle leaving the production chain is duly identified in a unique and singular manner, and that each product which has been distributed in warehouses, stores and restaurants is authentic and has not been manipulated, allowing the final user to recognize the quality and authenticity of the product easily, reliably and safely, without depending on third parties

This system should further ensure that it is impossible to reuse at least one of the original components, starting from the time at which the bottle has been opened, in order to prevent its counterfeiting.

In addition, the proposal provided by patent document WO-A-0175254 proposes a security device for bottles with the possibility of incorporating a responder acting by radiofrequency, which can be incorporated inside a cap to be coupled to the bottle. Nevertheless, the only objective of said responder is to detect if the bottle leaves a perimeter monitored by a security system, i.e., to prevent it from being stolen, but not the personalized identification of each of the bottles.

JP 2004 018 003 discloses a capsule for bottles according to the preamble of claim 1.

### Description of the Invention

It therefore seems to be necessary to cover the gaps in the state of the art relating not only to security against the theft of the bottles but also against their manipulation for the purpose of counterfeiting such bottles and/or their content

To that end, in a first aspect the present invention relates to the different types of capsule or capsules that are incorporated in the bottles, of the type comprising a device suitable for being detected through a wireless route by one or more sensors of a security system, when it is located within its coverage range, according to claim 1.

Said device, which can be passive or active, comprises storage means for storing identifying data and is adapted to allow at least their reading, also through a wireless route by said sensor or sensors of said security system and/or by other sensors that do not form part of said security system

Said wireless route allowing said detection and/or said wireless route allowing said reading are generally set up by means of radiofrequency, although other technologies which a person skilled in the art may think of are also possible, such as infrared technology, etc.

For one embodiment, the device is a laminar element, preferably a radiofrequency identification tag, or RFID tag.

As regards the mentioned identifying data, these comprise information which can be treated and managed by a control system associated to said sensors suitable for reading said identifying data, and to a database for managing and/or following and/or controlling the production and the distribution of said bottles.

For one embodiment, said identifying data include information relating to for example, name, year, winery, date of bottling, etc. of the liquid contained in the bottle to which said capsule belongs.

For another embodiment, the identifying data are only references to other corresponding data registered in said database, which are those that really include the characteristics of the product. For the latter case, storage means with a large storing capacity are not necessary because it is enough for each device to store a single reference.

Other preferred embodiments of the invention are defined in the dependent claims, as well as in the following description of several embodiments.

A second aspect of the present invention relates to a bottle which can be applied to contain an alcoholic beverage or liquor, comprising a capsule according to the first aspect of the present invention in any of its embodiments.

### Brief Description of the Drawings

Other features of the invention will be more clearly understood from the following description of several embodiments shown in the attached drawings and which must be considered as illustrative and non-limiting. In the drawings:
Figures 1 and 2 are two elevational views of the capsule proposed for two embodiments for which the proposed device is placed in two different outer areas of the capsule,
Figures 3 and 4 are two sectioned elevational views of two other embodiments in which the device is placed in two different inner areas of the capsule,
Figure 5 shows another further embodiment by means of an elevational view of the capsule for another arrangement of the proposed device,
Figures 6 to 8 show, by means of perspective views, three other embodiments depicting different versions of the proposed device,
Figure 9 shows a perspective view of part of a bottle incorporating the proposed capsule, which is depicted in an opening position, and
Figure 10 also shows a perspective view of part of the body of a bottle with the proposed capsule, the device of which is being examined by an external device in a wireless manner.

### Detailed Description of Several Embodiments

As shown in the figures, the bottle capsule comprises a flap 1 with different shapes and sizes wrapping the bottle neck and an upper part 2 covering the end of the bottle neck. According to the object of the invention, for the embodiments shown the proposed device is a radiofrequency identification element or RFID tag, microchip or the like 3.

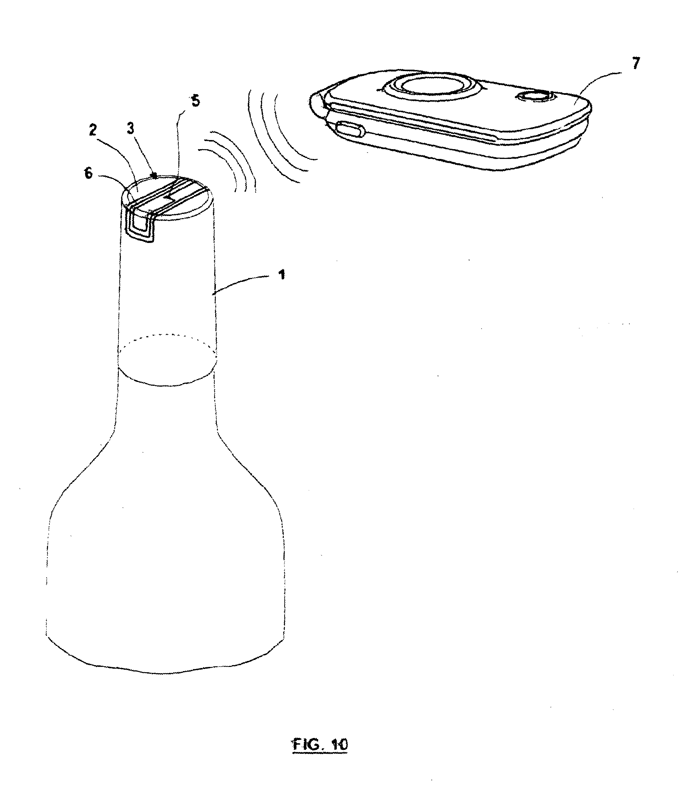

The aforementioned sensors suitable for reading the identifying data of the RFID tag 3 are or form part of, for example, an RFID reader, a mobile telephone a personal digital assistant (PDA) or the like 7 with an integrated or external RFID reading module, with the capacity of being connected directly to the reader or by means of wireless connection. Figure 10 shows one of said readers 7 in wireless communication with the RFID tag 3 of a capsule.

Additionally for another embodiment, the present invention also contemplates that the RFID device or tag 3 is adapted to allow writing data in said storage means, also through a wireless route.

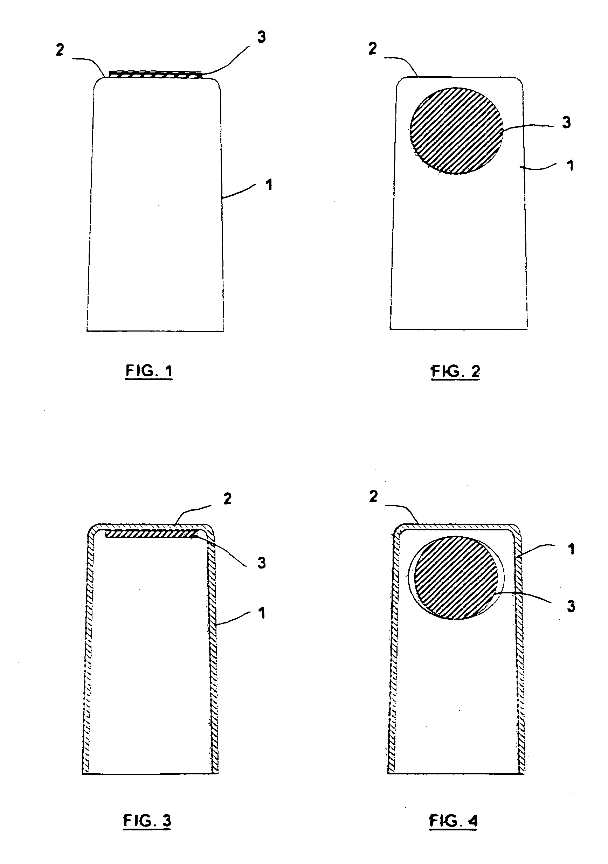

For the embodiment shown by Figures 1 and 2, the RFID tag 3 is placed in the outer part of the capsule, on said upper part 2 of the capsule and on said flap 1 respectively.

Figures 3 and 4 show other embodiments for which the RFID tag is placed in the inner part of the capsule, under the upper part 2 of the capsule and under the flap 1 respectively.

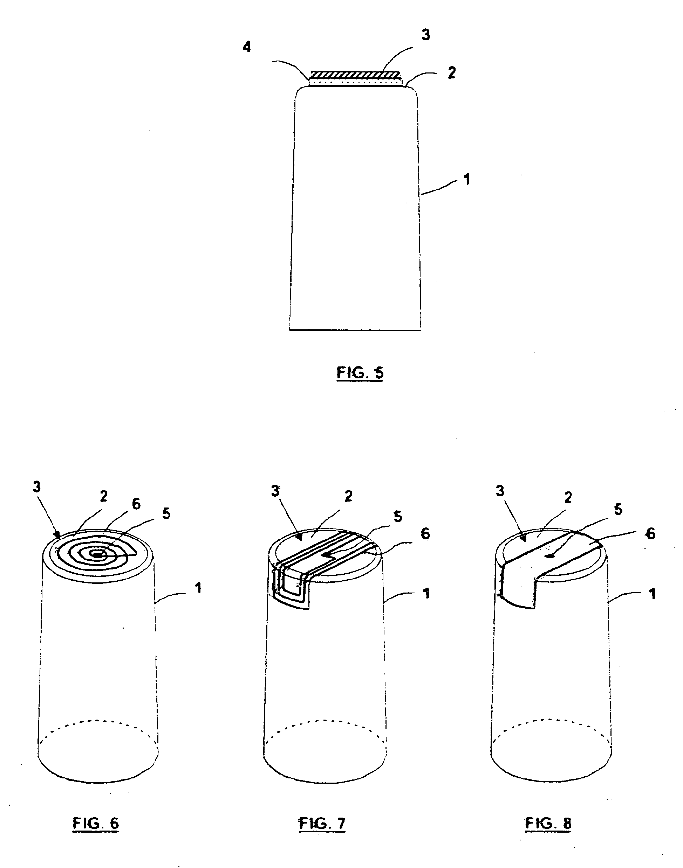

In the presence of metal, in the event that the capsule is made of metal, important interferences due to magnetic fields could occur, which interferences prevent reading the information of the RFID tag 3 or significantly reduce the distance for reading said RFID tag. For the purpose of minimizing and reducing the negative effect of such possible magnetic interferences on the RFID tag 3, such tag comprises suitable insulation means, which means comprise, for the embodiment shown in Figure 5, a separating element 4, made of an insulating material against magnetic interferences, such as ferrite, arranged between the RFID tag 3 and the part of the capsule in which it is placed (between the RFID tag 3 and the upper part 2 of the capsule in said figure).

For another embodiment (not shown) said insulation means comprise a film, made of an insulating material against magnetic interferences, covering at least part of the capsule.

For the embodiments shown in Figures 6 to 10, said RFID tag 3 contains an antenna 6 (which can have different shapes and sizes) and an integrated (reading or reading-writing) circuit 5, which circuit comprises a memory forming part or entirely forming said storage means, and in which a single code (such as the reference indicated previously) or a series of information on the product can be stored.

For the purpose of increasing the distance for reading the identifying data stored in the RFID tag 3, especially if the mentioned antenna 6 is a microantenna or short-range antenna, for one embodiment at least part of the capsule forms an additional antenna suitable for amplifying the signal emitted by said antenna 6, there being no physical contact between the two antennas.

In the event of incorporating information on the product in the memory of the RFID tag 3. this information is directly accessed by reading said RFID tag 3 by means of an RFID reader, mobile telephone, PDA or the like 7, as mentioned above (see Figure 10).

In the event that such tag only stores the mentioned reference or single code said single code that the RFID tag 3 has is also read by means of an RFID reader, mobile telephone, PDA or the like 7, but for an embodiment, the latter automatically sends the single code, through GSM/GPRS/UMTS technology or another wireless communication system or through internet for example, to a database associated to the aforementioned control system, which control system sends back to it the information corresponding to said single code, two types of communications therefore being used, a wireless communication between the RFID reader 7 and the RFID tag 3, and another not necessarily wireless communication between the reader 7 and the device comprising said database (the latter communication necessarily being two-way).

As indicated above, for an exemplary embodiment it is possible to write in the RFID tag 3, it is thus possible to directly introduce additional information required by the manufacturer in the memory of the integrated circuit 5.

For the case in which the RFID tag 3 only stores a reference, said additional information can be registered in said database, in this case it is not necessary to be able to write in the memory of the integrated circuit 5.

Said information or identifying data can contain data about the products, or other data for promotional or advertising, marketing purposes, etc., it is available in real time and allows identifying the product, informing the consumer (through the use of mobile telephones or other electronic devices which can communicate through a wireless route), protecting manufacturers and brands, managing, following and controlling the production and distribution of the products by the manufacturers. In other words, all the capabilities inherent to the use of RFID.

The use of a mobile telephone, PDA, or the like 7- a device with a great penetration and used daily worldwide for reading and identifying bottles of beverages allows the final user to have a universal system facilitating an easy, reliable and safe recognition of the quality and authenticity of the product without depending on third parties and at the same time providing him or her with useful and valuable information about the products.

Said RFID tag, microchip or the like 3 allows recognizing the original products by means of a single and exclusive identification for each product.

The possibility of counterfeiting the RFID tag 3 is minimal due to the high technology and to the important economic cost involved in assembling a production plant.

The possibility of falsifying the information contained in the RFID tag 3 is minimal, due to the control of the numbered integrated circuits 5 which are manufactured and the possibility of encrypting the data.

The brands can be assured that the marketed volume on the market is the one that is duly authorized by means of controlling the integrated circuits 5 contained in the RFID tags 3.

There are different possibilities for placing the RFID tag 3 on the capsule

In Figures 1 to 5, the RFID tag 3 is a separate element adhered to the capsule by means of an assembling process, for example, using a specific adhesive or glue. Another way to implement the RFID tag 3 in the capsule is integrating it during the capsule manufacturing process. Figures 6 to 8 show said RFID tag 3 integrated in the capsule with different types of antennas 6 (coil-type antenna, dipole-type antenna).

A new method for placing the RFID tag 3 on the capsule is applied to ensure a complete protection against a possible reuse of the RFID tag 3. Specifically, as can be seen in Figures 7 to 10, part of the tag 3 is arranged on (although it could also be under) the upper part 2 and part of it is arranged on (although it could also be under) the flap 1, such that when the capsule or part of it is cut or removed in order to open the bottle, the tag 3 or part of it is destroyed or works in an anomalous or irregular manner.

For a preferred embodiment, the integrated circuit 5 is placed in the central part of the upper surface 2 of the capsule, and part of the antenna 6 is placed on the central part of the upper surface 2 and extends on both sides on the flap 1 of the capsule. This is the case of the embodiments shown in Figures 7 to 10 (although only one side of the flap 1 is observed).

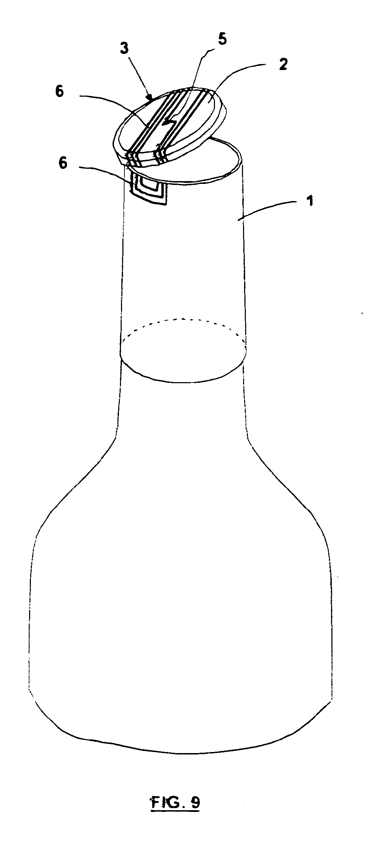

By means of such arrangement, when the upper part of the capsule is removed to access the cap, or the cork in the case of wine by means of cutting the part of the capsule covering the end of the bottle neck either directly or according to several pre-cuts arranged for the purpose of making the removal of the capsule easier, a cut also occurs with the subsequent breaking of the antenna 6, as can be seen in Figure 9. Said cut in the antenna 6 makes it useless and prevents reading the RFID tag 3.

Also in the case of wine, when the cork is removed from the bottles without removing the upper part of the capsule, the RFID tag 3 is perforated with the corkscrew, destroying the integrated circuit 5 placed at the center of the upper part 2 of the capsule or cutting the antenna 6, thus destroying the connection between the integrated circuit 5 and the antenna 6. Said cuts or erosions will prevent any later reading of the RFID tag 3. For this case, it is obviously not necessary for the antenna 6 to extend along the flap 1 of the capsule, i.e. an arrangement such as the one shown in Figure 5, in which both the antenna 6 and the integrated circuit 5 are placed on the upper part 2, would be sufficient.

A person skilled in the art could introduce changes and modifications in the described embodiments without departing from the scope of the invention as it is defined in the attached claims.

## Claims

1. A capsule for a bottle, including a device (3) suitable for being detected through a wireless route by one or more sensors, when it is located within its coverage range, said sensor or sensors forming part of a security or control system with the possibility of being associated to a database for managing and/or following and/or controlling the production and the distribution of said bottles, said device (3) comprising storage means for storing identifying or informative data and being adapted to allow at least their reading, also through a wireless route, by said sensor or sensors of said security system and/or of said control system and/or by other sensors that form part neither of said security system nor of said control system, said capsule being **characterized in that** it comprises insulation means provided to minimize and to reduce the negative effect of possible magnetic interferences on the device (3) occurred in the presence of metal, said insulation means comprising a separator element (4), made of an insulating material against magnetic interferences, arranged between the device (3) and the part of the capsule where it has been located.

2. A capsule for bottles according to claim 1, **characterized in that** said capsule is made of metal.

3. A capsule for bottles according to claim 1 or 2, **characterized in that** said separator element (4) is made of ferrite.

4. A capsule for bottles according to claim 1, **characterized in that** said wireless route allowing said detection and/or said wireless route allowing said reading are set up by means of radiofrequency.

5. A capsule according to claim 1 or 2, **characterized in that** said device (3) is a laminar element (3).

6. A capsule according to claim 5, **characterized in that** said laminar element (3) is a radiofrequency identification tag (3) or RFID tag (3).

7. A capsule for bottles according to any of the previous claims, **characterized in that** it comprises a flap (1) wrapping the bottle neck and an upper part (2) covering the end of the bottle neck.

8. A capsule for bottles according to claim 7, **characterized in that** said device (3) is placed in the outer part of the capsule on said flap (1) and/or on said upper part (2) of the capsule.

9. A capsule for bottles according to claim 7, **characterized in that** said device (3) is placed in the inner part of the capsule under the flap (1) and/or under the upper part (2) of the capsule.

10. A capsule for bottles according to claim 1, **characterized in that** said insulation means comprise a film, made of an insulating material against magnetic interferences, covering at least part of the capsule.

11. A capsule for bottles according to any of the previous claims, **characterized in that** the device (3) contains an antenna (6) and an integrated circuit (5), and **in that** said storage means comprise a memory forming part of said integrated circuit (5).

12. A capsule for bottles according to claim 11, **characterized in that** said integrated circuit (5) and/or said antenna (6) are integrated in the capsule.

13. A capsule for bottles according to claim 12, **characterized in that** at least part of the capsule forms an additional antenna suitable for amplifying the signal emitted by said antenna (6), to increase the distance for reading the identifying data stored in the device (3).

14. A capsule for bottles according to any of the previous claims, **characterized in that** at least part of the device (3) is arranged on or under said upper part and part of it is arranged on or under said flap (1), such that when the capsule or part of it is cut or removed in order to open the bottle, said device (3) or part of it is destroyed or works in an anomalous or irregular manner.

15. A capsule for bottles according to claim 14, **characterized in that** at least the antenna (6) is placed on the central part of the upper surface (2) and extends on both sides on the flap (1) of the capsule.

16. A capsule for bottles according to claim 15, **characterized in that** the integrated circuit (5) is also placed in the central part of the upper surface (2) of the capsule.

17. A capsule for bottles according to any of the previous claims, **characterized in that** said sensors suitable for reading the identifying data of the device (3) are or form part of at least one of the group selected from: a wireless reader, a mobile telephone and a personal digital assistant or PDA with an integrated or external, reading or reading and writing RFID module.

18. A capsule for bottles according to claim 1, **characterized in that** said device (3) is adapted to allow writing data in said storage means, also through a wireless route.

19. A capsule for bottles according to claim 1, **characterized in that** said device (3) is passive.

20. A capsule for bottles according to claim 1, **characterized in that** said device (3) is active.

21. A bottle which can be applied to contain an alcoholic beverage or liquor, **characterized in that** it comprises a capsule according to any of the previous claims.

## Patentansprüche

1. Kapsel für eine Flasche, mit einer Vorrichtung (3), die über eine Funkstrecke mittels eines oder mehrerer Sensoren detektierbar ist, wenn sie sich innerhalb des Erfassungsbereichs der Sensoren befindet, wobei der Sensor oder die Sensoren Teil eines Sicherheits- oder Kontrollsystems ist bzw. sind, das mit einer Datenbank zum Verwalten und/oder Nachverfolgen und/oder Kontrollieren der Produktion und der Verteilung der Flaschen verbindbar sind, wobei die Vorrichtung (3) eine Speichereinrichtung zum Speichern von Identifiktions- oder Informationsdaten aufweist und in der Lage ist, mindestens ein ebenfalls über die Funkstrecke erfolgendes Lesen der Daten mittels des Sensors oder der Sensoren des Sicherheits- und/oder des Kontrollsystems und/oder mittels anderer Sensoren zu ermöglichen, die weder Teil des Sicherheitssystems noch des Kontrollsystems sind,
wobei die Kapsel **dadurch gekennzeichnet ist, dass** sie eine Isoliereinrichtung aufweist, die dazu vorgesehen ist, den negativen Effekt möglicher magnetischer Interferenzen auf die Vorrichtung (3), die in Gegenwart von Metall auftreten, zu minimieren und zu reduzieren, wobei die Isoliereinrichtung ein aus einem Isoliermaterial gegen magnetische Interferenzen hergestelltes Separatorelement (4) aufweist, das zwischen der Vorrichtung (3) und dem Teil der Kapsel angeordnet ist, an dem es platziert worden ist.

2. Kapsel für Flaschen nach Anspruch 1, **dadurch gekennzeichnet, dass** die Kapsel aus Metall hergestellt ist.

3. Kapsel für Flaschen nach Anspruch 1 oder 2, **dadurch gekennzeichnet, dass** das Separatorelement (4) aus Ferrit hergestellt ist.

4. Kapsel für Flaschen nach Anspruch 1, **dadurch gekennzeichnet, dass** die Funkstrecke zum Ermöglichen der Detektion und/oder die Funkstrecke zum Ermöglichen des Lesens mittels Funkfrequenzen erstellt sind.

5. Kapsel für Flaschen nach Anspruch 1 oder 2, **dadurch gekennzeichnet, dass** die Vorrichtung (3) ein Laminarelement (3) ist.

6. Kapsel für Flaschen nach Anspruch 5, **dadurch gekennzeichnet, dass** das Laminarelement (3) ein Funkfrequenzidentifikations-Tag (3) oder RFID-Tag (3) ist.

7. Kapsel für Flaschen nach einem der vorhergehenden Ansprüche, **dadurch gekennzeichnet, dass** die Kapsel eine den Flaschenhals umwickelnde Lasche (1) und einen das Ende des Flaschenhalses bedeckenden oberen Teil (2) aufweist.

8. Kapsel für Flaschen nach Anspruch 7, **dadurch gekennzeichnet, dass** die Vorrichtung (3) in dem äußeren Teil der Kapsel an der Lasche (1) und/oder an dem oberen Teil (2) der Kapsel platziert ist.

9. Kapsel für Flaschen nach Anspruch 7, **dadurch gekennzeichnet, dass** die Vorrichtung (3) in dem inneren Teil der Kapsel unter der Lasche (1) und/oder unter dem oberen Teil (2) der Kapsel platziert ist.

10. Kapsel für Flaschen nach Anspruch 1, **dadurch gekennzeichnet, dass** die Isoliereinrichtung einen aus einem Isoliermaterial gegen magnetische Interferenzen hergestellten Film aufweist, der mindestens einen Teil der Kapsel bedeckt.

11. Kapsel für Flaschen nach einem der vorhergehenden Ansprüche, **dadurch gekennzeichnet, dass** die Vorrichtung (3) eine Antenne (6) und eine integrierte Schaltung (5) aufweist und dass die Speichereinrichtung einen Speicher aufweist, der Teil der integrierten Schaltung (5) ist.

12. Kapsel für Flaschen nach Anspruch 11, **dadurch gekennzeichnet, dass** die integrierte Schaltung (5) und/oder die Antenne (6) in die Kapsel integriert sind.

13. Kapsel für Flaschen nach Anspruch 12, **dadurch gekennzeichnet, dass** mindestens ein Teil der Kapsel eine zusätzliche Antenne bildet, die zum Verstärken des von der Antenne (6) ausgegebenen Signals geeignet ist, um die Distanz zum Lesen der in der Vorrichtung (3) gespeicherten Identifikationsdaten zu vergrößern.

14. Kapsel für Flaschen nach einem der vorhergehenden Ansprüche, **dadurch gekennzeichnet, dass** mindestens ein Teil der Vorrichtung (3) an oder unter dem oberen Teil angeordnet ist und ein Teil der Vorrichtung an oder unter der Lasche (1) angeordnet ist, derart, dass, wenn die Kapsel oder ein Teil der Kapsel eingeschnitten oder entfernt wird, um die Flasche zu öffnen, die Vorrichtung (3) oder der Teil der Vorrichtung zerstört wird oder in einer anormalen oder irregulären Weise arbeitetet.

15. Kapsel für Flaschen nach Anspruch 14, **dadurch gekennzeichnet, dass** mindestens die Antenne (6) an dem zentralen Teil der oberen Fläche (2) platziert ist und sich an beiden Seiten der Lasche (1) der Kapsel erstreckt.

16. Kapsel für Flaschen nach Anspruch 15, **dadurch gekennzeichnet, dass** die integrierte Schaltung (5) ebenfalls in dem zentralen Teil der oberen Fläche (2) der Kapsel platziert ist.

17. Kapsel für Flaschen nach einem der vorhergehenden Ansprüche, **dadurch gekennzeichnet, dass** die zum Lesen der Identifikationsdaten der Vorrichtung (3) geeigneten Sensoren mindestens ein Element oder ein Teil des Elements der Gruppe sind bzw. bilden, die umfasst: eine drahtlose Lesevorrichtung, ein Mobiltelefon und ein Personal Digital Assistant oder PDA mit einem integrierten oder externen Lese- oder Lese- und Schreib-RFID-Modul.

18. Kapsel für Flaschen nach Anspruch 1, **dadurch gekennzeichnet, dass** die Vorrichtung (3) in der Lage ist, das Schreiben von Daten in die Speichereinrichtung, auch über eine Funkstrecke, zu ermöglichen.

19. Kapsel für Flaschen nach Anspruch 1, **dadurch gekennzeichnet, dass** die Vorrichtung (3) passiv ist.

20. Kapsel für Flaschen nach Anspruch 1, **dadurch gekennzeichnet, dass** die Vorrichtung (3) aktiv ist.

21. Flasche, verwendbar zur Aufnahme eines alkoholischen Getränks oder einer Spirituose, **dadurch gekennzeichnet, dass** die Flasche eine Kapsel nach einem der vorhergehenden Ansprüche aufweist.

## Revendications

1. Capsule pour une bouteille, comportant un dispositif (3) pouvant être détecté par une voie sans fil par un ou plusieurs capteurs, lorsqu'il se situe dans sa plage de couverture, le ou les capteurs précités faisant partie d'un système de sécurité ou de contrôle, avec la possibilité d'être associés à une base de données pour gérer et/ou suivre et/ou commander la production et la distribution desdites bouteilles, ledit dispositif (3) comprenant des moyens de stockage pour stocker des données d'identification ou d'information et étant aptes à permettre au moins leur lecture, également par une voie sans fil, par le ou les capteurs précités dudit système de sécurité et/ou dudit système de contrôle et/ou par d'autres capteurs qui ne font pas partie ni dudit système de sécurité ni dudit système de contrôle, ladite capsule étant **caractérisée en ce qu'**elle comprend des moyens d'isolation réalisés pour réduire à un minimum et pour diminuer l'effet négatif d'interférences magnétiques possibles sur le dispositif (3) générées en présence d'un métal, lesdits moyens d'isolation comprenant un élément séparateur (4), réalisé en un matériau isolant des interférences magnétiques, agencé entre le dispositif (3) et la partie de la capsule où il a été placé.

2. Capsule pour bouteilles selon la revendication 1, **caractérisée en ce que** ladite capsule est réalisée en métal.

3. Capsule pour bouteilles selon la revendication 1 ou 2, **caractérisée en ce que** ledit élément séparateur (4) est réalisé en ferrite.

4. Capsule pour bouteilles selon la revendication 1, **caractérisée en ce que** ladite voie sans fil permettant ladite détection et/ou ladite voie sans fil permettant ladite lecture sont réalisées au moyen de radiofréquence.

5. Capsule selon la revendication 1 ou 2, **caractérisée en ce que** ledit dispositif (3) est un élément laminaire (3).

6. Capsule selon la revendication 5, **caractérisée en ce que** ledit élément laminaire (3) est un marqueur d'identification de radiofréquence (3) ou un marqueur RFID (3) .

7. Capsule pour bouteilles selon l'une quelconque des revendications précédentes, **caractérisée en ce qu'**elle comprend un volet (1) recouvrant le col de la bouteille et une partie supérieure (2) couvrant l'extrémité du col de la bouteille.

8. Capsule pour bouteilles selon la revendication 7, **caractérisée en ce que** ledit dispositif (3) est placé dans la partie extérieure de la capsule sur ledit volet (1) et/ou sur ladite partie supérieure (2) de la capsule.

9. Capsule pour bouteilles selon la revendication 7, **caractérisée en ce que** ledit dispositif (3) est placé dans la partie intérieure de la capsule sous le volet (1) et/ou sous la partie supérieure (2) de la capsule.

10. Capsule pour bouteilles selon la revendication 1, **caractérisée en ce que** lesdits moyens d'isolation comprennent un film, réalisé en un matériau isolant des interférences magnétiques, couvrant au moins une partie de la capsule.

11. Capsule pour bouteilles selon l'une quelconque des revendications précédentes, **caractérisée en ce que** le dispositif (3) contient une antenne (6) et un circuit intégré (5), et **en ce que** lesdits moyens de stockage comprennent une mémoire faisant partie dudit circuit intégré (5).

12. Capsule pour bouteilles selon la revendication 11, **caractérisée en ce que** ledit circuit intégré (5) et/ou ladite antenne (6) sont intégrés dans la capsule.

13. Capsule pour bouteilles selon la revendication 12, **caractérisée en ce qu'**au moins une partie de la capsule forme une antenne additionnelle apte à amplifier le signal émis par ladite antenne (6) afin d'augmenter la distance pour la lecture des données d'identification stockées dans le dispositif (3).

14. Capsule pour bouteilles selon l'une quelconque des revendications précédentes, **caractérisée en ce qu'**au moins une partie du dispositif (3) est agencée sur ou sous ladite partie supérieure, et une partie de celui-ci est agencée sur ou sous ledit volet (1) de telle sorte que lorsque la capsule ou la partie de celle-ci est coupée ou retirée pour ouvrir la bouteille, ledit dispositif (3) ou une partie de celui-ci est détruit ou fonctionne d'une manière anormale ou irrégulière.

15. Capsule pour bouteilles selon la revendication 14, **caractérisée en ce qu'**au moins l'antenne (6) est placée sur la partie centrale de la surface supérieure (2) et s'étend sur les deux côtés du volet (1) de la capsule.

16. Capsule pour bouteilles selon la revendication 15, **caractérisée en ce que** le circuit intégré (5) est également placé dans la partie centrale de la surface supérieure (2) de la capsule.

17. Capsule pour bouteilles selon l'une quelconque des revendications précédentes, **caractérisée en ce que** lesdits capteurs aptes à lire les données d'identification du dispositif (3) sont ou font partie d'au moins un du groupe sélectionné parmi: un lecteur sans fil, un téléphone mobile et un assistant numérique personnel ou PDA avec un module RFID intégré ou externe, de lecture ou de lecture et d'écriture.

18. Capsule pour bouteilles selon la revendication 1, **caractérisée en ce que** ledit dispositif (3) est apte à permettre l'écriture de données dans lesdits moyens de stockage, également par une voie sans fil.

19. Capsule pour bouteilles selon la revendication 1, **caractérisée en ce que** ledit dispositif (3) est passif.

20. Capsule pour bouteilles selon la revendication 1, **caractérisée en ce que** ledit dispositif (3) est actif.

21. Bouteille qui peut être utilisée pour contenir une boisson alcoolique ou liqueur, **caractérisée en ce qu'**elle comprend une capsule selon l'une quelconque des revendications précédentes.
